# EUROPÄISCHE PATENTANMELDUNG

(11) **EP 2 690 130 A1**
(43) Veröffentlichungstag der Anmeldung: **29.01.2014**
(21) Anmeldenummer: 12177429.3
(22) Anmeldetag: 23.07.2012
(51) Int. Cl.: C08K 3/00, C08K 7/02, C08L 23/20, C08L 91/00, C09K 3/10, D06N 5/00

(54) **Zusammensetzung und ihre Verwendung als Dicht- sowie Klebstoff**

(71) Anmelder: Bischoff, Achim, 42799 Leichlingen (DE)
(72) Erfinder: Bischoff, Achim, 42799 Leichlingen (DE)
(74) Vertreter: Gille Hrabal

(57) **Zusammenfassung**

Die Erfindung betrifft eine Zusammensetzung und ihre Verwendung als Dicht-und Klebstoff, insbesondere zur Herstellung von Abdeckungen - bzw. Abdichtungen insbesondere für Gebäude- oder Gebäudeteilen.

Die Erfinder fanden überraschend, dass eine Zusammensetzung, enthaltend:
k) mindestens ein naphthenisches Mineralölraffinat,
l) mindestens ein Polyisobuten,
m) mindestens ein Zylinderöl,
n) mindestens einen anorganischen Füllstoff,
o) mindestens einen faserförmigen Füllstoff,
p) wahlweise ein oder mehrere Pigmente,
q) wahlweise ein oder mehrere Verdickungsmittel,
r) wahlweise ein oder mehrere Dispergiermittel,
s) wahlweise ein oder mehrere Stabilisierungsmittel,
t) wahlweise ein oder mehrere Hilfsmittel

Vorteile insbesondere im Vergleich zu Butyl aufweist wie zum Beispiel Klebbarkeit auf feuchtem Untergrund.

## Beschreibung

Die Erfindung betrifft eine Zusammensetzung und ihre Verwendung als Dicht- und/oder Klebstoff, insbesondere zur Herstellung von Abdeckungen insbesondere für Gebäude.

Eine Abdeckung im Sinne der Erfindung umfasst eine Schicht, die auf einer Seite mit einer Klebstoffschicht versehen ist. Die Schicht wird insbesondere durch eine aus Kunststoff oder Metall bestehende Folie oder durch ein aus Kunststoff oder Metall bestehendes Gewebe oder Vlies gebildet. Die Schicht ist in der Regel dehnbar, streckbar und/ oder biegsam. Die Klebstoffschicht besteht bei einer Abdeckung für ein Gebäude bislang meistens aus Butyl.

Eine Abdeckung im Sinne der Erfindung kann ein Anschluss- oder Abschlussband bei einem Gebäude sein, wie dieses zum Beispiel aus der Druckschrift DE 100 39 009 A1 bekannt ist. Es handelt sich dabei um eine biegsame, streckbare, aus Metall bestehende Folie, die mit Butyl beschichtet ist. Mit Hilfe der aus Butyl bestehenden Schicht wird die Abdeckung bei Übergängen aufgeklebt, um so insbesondere vor Feuchtigkeit zu schützen.

Um eine Butyl umfassende Abdeckung haltbar aufkleben zu können, muss der Untergrund trocken sein. Bei regnerischer Witterung sind bei einem Gebäude Untergründe jedoch regelmäßig nass oder zumindest feucht. Witterungsbedingt kann sich daher eine vorgesehene Anbringung einer Abdeckung verzögern.

Um eine Abdeckung handhaben zu können, wird die Seite einer Butylschicht, die auf einen Untergrund aufgeklebt werden soll, zunächst mit einem Trennpapier, auch "Release Liner" genannt, abgedeckt. Das Trennpapier weist eine in der Regel Silikon haltige und deshalb antihaftende Oberfläche auf, um von der Butylschicht unmittelbar vor einer Anbringung auf einem Untergrund gelöst werden zu können. Bei längeren Lagerzeiten gelangt Silikon vom Trennpapier derart auf die Butyloberfläche, dass diese nach dem Abziehen des Trennpapiers ihre Klebwirkung nicht mehr zu entfalten vermag.

Dichtstoffe sind Werkstoffe zum Abdichten von Fugen und Spalten. Bei den Dichtstoffen unterscheidet man grundsätzlich zwischen chemisch reaktiven Dichtstoffen (beispielsweise Silikone, Polyurethane etc.) und chemisch nicht reaktiven Dichtstoffen (beispielsweise Butyl-Dichtstoffe, lösemittelhaltige Dichtstoffe etc.). Ein Dichtstoff muss insbesondere Adhäsion zu den abzudichtenden Bauteilen aufweisen. Ein häufig auftretendes Problem besteht in der Aufbringung von Dichtstoffen auf feuchten Oberflächen, welche häufig an Baustellen besondere im Bereich des Daches angetroffen werden, weil die Feuchtigkeit eine gute Adhäsion zu den Baustoffen verhindert. Das Problem tritt auch bei Butyl-Dichtstoffen auf. Ein weiteres Problem von Dichtstoffen gerade im Bereich von Dachabdeckungen besteht darin, dass diese oftmals großen Temperaturschwankungen ausgesetzt sind. Ein dafür geeignete Dichtstoff muss gewissermaßen den Spagat zwischen dem Erhalt des Adhäsionvermögens bzw. der Klebrigkeit bei tiefen Temperaturen und dem Stehvermögen bzw. bei extrem hohen Temperaturen wie bis zu 90 °C (d.h. der Dichtstoff darf bei hohen Temperaturen nicht zerfließen). Weiterhin sollte es möglich sein Dichtstoffe selbstauslöschend und sogar unbrennbar auszustatten. Damit ein Dichtstoff am Markt erfolgreich sein kann, muss er wirtschaftlich herstellbar und verarbeitbar sein. Daher sollte er aus preiswerten Rohstoffen herstellbar sein und in handelsüblichen Schmelzanlagen verarbeitbar sein. Die bislang häufig eingesetzten Butyl-Dichtstoffe werden den vorstehend beschriebenen Anforderungen nicht immer gerecht bzw. lassen sich nicht in einfacher Weise an die genannten Bedürfnisse anpassen. Es bestand daher der Wunsch nach der Bereitstellung einer Alternative zu den genannten Butyl-Dichtstoffen, welche für deren Anwendungsgebiete geeignet ist, gleichzeitig jedoch die bestehend beschriebenen Probleme löst. Die Erfinder fanden überraschend, dass eine Zusammensetzung, enthaltend:
a) mindestens ein naphthenisches Mineralölraffinat,
b) mindestens ein Polyisobuten,
c) mindestens ein Zylinderöl,
d) mindestens einen anorganischen Füllstoff,
e) mindestens einen faserförmigen Füllstoff,
f) wahlweise ein oder mehrere Pigmente,
g) wahlweise ein oder mehrere Verdickungsmittel,
h) wahlweise ein oder mehrere Dispergiermittel,
i) wahlweise ein oder mehrere Stabilisierungsmittel,
j) wahlweise ein oder mehrere Hilfsmittel
die vorstehend beschriebene Aufgabenstellung löst. Das bedeutet, dass diese Zusammensetzung einen Dicht- bzw. Klebstoff bereitstellt, der auf feuchte Oberflächen, wie insbesondere Baustoffe, wie Dachziegel etc. aufgebracht werden kann, ohne dass es zu einer Beeinträchtigung der Adhäsion kommt. Dabei wurde insbesondere beobachtet, dass die Zusammensetzung quasi selbst-anziehend ist, d,h" sie muss nur auf ein geeignetes, auch feuchtes, Substrat ohne Anwendung von Druck aufgelegt werden, und baut dann selbstständig Adhäsion zu dem Substrat auf. Des Weiteren besitzt die genannte Zusammensetzung ein hohes Adhäsionsvermögen selbst bei tiefen Temperaturen bis beispielsweise -30 °C. Gleichzeitig besitzt sie eine hohe Temperaturbeständigkeit, d,h" dass sie bei hohen Temperaturen wie beispielsweise bis zu 90 °C nicht fließt. Die Zusammensetzung kann aus preiswerten Rohstoffen hergestellt werden und lässt sich in handelsüblichen Schmelzanlagen verarbeiten. Darüber hinaus kann ihr Eigenschaftsprofil vielfältig an die speziellen Anforderungen (wie Flammbeständigkeit etc.) durch einfache Modifizierungen angepasst werden. Die Zusammensetzung lässt sich weiterhin je nach Anwendung in einfacher Weise auf sehr weiche bis sehr feste bzw. sehr steife Qualitäten einstellen, was nach dem Stand der Technik deutlich schwieriger war. Die erfindungsgemäße Zusammensetzung erfordert überdies nicht die Verwendung von so genannten Gefahrstoffen, Darüber hinaus fand der Erfinder, dass die Zusammensetzung auch geeignet als Splitterschutz, beispielsweise bei Schutzwesten bzw. Panzerungen verwendet werden kann. Schließlich wurde auch gefunden, dass die Zusammensetzung geeignet ist, als Antidröhn-Schicht verwendet zu werden. Die Zusammensetzung lässt sich einfach zu Schicht-förmigen Materialien auf geeigneten Trägern beispielsweise in Form von Rollware verarbeiten und besitzt ein hohes Adhäsion- bzw. Klebevermögen zu einer Vielzahl von Substraten wie beispielsweise Baustoffe, wie solche aus Holz, Beton, Keramik, Metallen etc.

Die erfindungsgemäße Zusammensetzung kann in weiten Teilen je nach Anforderungsprofil und gewünschter Härte variiert werden, Überraschend lässt sich die erfindungsgemäße Zusammensetzung darüber hinaus durch einfache Steuerung der Vermischungsparameter bei der Herstellung in geschäumter Form ausbilden.

In einer bevorzugten Ausführungsform enthält die erfindungsgemäße Zusammensetzung:
a) 5 - 60 Gew.-Teile mindestens ein naphthenisches Mineralölraffinat,
b) 0,5 - 10 Gew.-Teilen mindestens ein Polyisobuten,
c) 2 - 40 Gew.-Teile mindestens ein Zylinderöl,
d) 50 - 400 Gew.-Teile mindestens einen anorganischen Füllstoff,
e) 0,1 - 10 Gew.-Teile mindestens einen faserförmigen, vorzugsweise organischen Füllstoff.

Noch bevorzugter enthält sie:
a) 10 - 45 Gew.-Teile mindestens ein naphthenisches Mineralölraffinat,
b) 1 - 8 Gew.-Teilen mindestens ein Polyisobuten,
c) 10 - 35 Gew.-Teile mindestens ein Zylinderöl,
d) 150 - 350 Gew.-Teile mindestens einen anorganischen Füllstoff,
e) 1 - 7 Gew.-Teile mindestens einen faserförmigen, vorzugsweise organischen Füllstoff.

Ganz besonders bevorzugt enthält sie:
a) 20 - 45 Gew.-Teile mindestens ein naphthenisches Mineralölraffinat,
b) 2 - 6 Gew.-Teilen mindestens ein Polyisobuten,
c) 15 - 30 Gew.-Teile mindestens ein Zylinderöl,
d) 200 - 300 Gew.-Teile mindestens einen anorganischen Füllstoff,
e) 2 - 5 Gew.-Teile mindestens einen faserförmigen, vorzugsweise organischen Füllstoff.

Darüber hinaus kann die erfindungsgemäße Zusammensetzung
f) wahlweise ein oder mehrere Pigmente in einem Anteil von beispielsweise bis zu 20 Gewichtsteilen,
g) wahlweise ein oder mehrere Verdickungsmittel in einem Anteil von beispielsweise bis zu 10 Gewichtsteilen,
h) wahlweise ein oder mehrere Dispergiermittel in einem Anteil von beispielsweise bis zu 10 Gewichtsteilen,
i) wahlweise ein oder mehrere Stabilisierungsmittel in einem Anteil von beispielsweise bis zu 10 Gewichtsteilen,
j) wahlweise ein oder mehrere Hilfsmittel in einem Anteil von beispielsweise bis zu 10 Gewichtsteilen,
   enthalten.

### Beschreibung der Komponenten der Zusammensetzung:

### Komponente a) - Naphthenisches Mineralölraffinat

Als erfindungsgemäße Komponente a) werden sogenannte naphthenische Mineralölraffinate verwendet, Sie können allein oder in Mischung von zwei oder mehr davon verwendet werden. Dabei handelt es sich um raffinierte Mineralölfraktionen, die einen hohen Anteil alicyclischer Kohlenwasserstoffe (Naphthene) und gesättigter aliphatischer Kohlenwasserstoffe (Paraffine) aufweisen. Darüber hinaus können diese Mineralölraffinate aromatische Kohlenwasserstoffe enthalten (was jedoch weniger bevorzugt ist). Erfindungsgemäß sind insbesondere naphthenische Mineralölraffinate bevorzugt, die eine eine kinematische Viskosität bei 20°C von mehr als 20 mm²/s, bevorzugter von mehr als 50 mm²/s, noch bevorzugter von mehr als 70 mm²/s (nach DIN EN ISO 3104) aufweisen. Eine solche Viskosität ist insbesondere deshalb vorteilhaft, um der Dichtmasse die angestrebte Geschmeidigkeit zu verleihen. Weiterhin weisen die erfindungsgemäß verwendeten naphthenischen Mineralölraffinate einen sogenannten Pourpoint von weniger als 0 °C, bevorzugter von weniger als -15 °C noch bevorzugter von weniger als -30 °C auf (nach DIN ISO 3016) auf. Ein solcher Pourpoint ist insbesondere deshalb vorteilhaft, um auch bei tiefen Temperaturen bis insbesondere etwa -30 °C die angestrebte Geschmeidigkeit bzw. Klebrigkeit der Dichtmasse zu erhalten. Die erfindungsgemäß verwendeten naphthenischen Mineralölraffinate weisen weiterhin bevorzugt einen Flammpunkt COC nach DIN ISO 2592 von mehr als 100°C, bevorzugter von mehr als 130 °C noch bevorzugter von mehr als 160 °C auf, insbesondere um eine ausreichende Feuerbeständigkeit des Dichtstoffes bereitzustellen. Das erfindungsgemäß verwendete naphthenische Mineralölraffinat wird weiterhin vorzugsweise charakterisiert durch einen Gehalt an aromatischen Kohlenstoffatomen (CA) (nach DIN 51378) von weniger als 20 %, bevorzugter weniger als 15 %, noch bevorzugter von weniger als 10 %, einen Gehalt an naphthenischen Kohlenstoffatomen (CN) (nach DIN 51378) von mehr als 20 %, bevorzugter von mehr als 30 %, noch bevorzugter von mehr als 40 % und einen Gehalt an paraffinischen Kohlenstoffatomen (CP) (nach DIN 51378) von mehr als 20 %, bevorzugter von mehr als 30 %, noch bevorzugter von mehr als 40 %. Es hat sich herausgestellt, dass die Verwendung des vorstehend beschriebenen naphthenischen Mineralölraffinates den vorstehend beschriebenen Anforderungen in geradezu idealer Weise gerecht wird, und insbesondere zu einer hohen Geschmeidigkeit der Dichtmasse selbst bei niedrigsten Temperaturen und gleichzeitig optimaler Verarbeitbarkeit und Klebrigkeit führt. Geeignete naphthenische Mineralölraffinate sind im Handel erhältlich, Der Gehalt des naphthenischen Mineralölraffinates bezogen auf die Gesamtmenge der Zusammensetzung beträgt beispielsweise etwa 4-25 Gewichtsprozent, bevorzugter etwa 7-20 Gewichtsprozent, noch bevorzugter etwa 8-15 Gewichtsprozent. Komponente a) unterscheidet sich stofflich sowohl von Komponente b) als auch von Komponente c).

### Komponente b) - Polyisobuten

Als erfindungsgemäße Komponente b) wird mindestens ein Polyisobuten verwendet. Polyisobuten (auch als Polyisobutylen (PIB) bezeichnet) ist ein durch kationische Polymerisationsgrad von Isobuten hergestelltes Polymer. Die Komponente b) dient in der erfindungsgemäßen Zusammensetzung insbesondere dazu, ihr die erforderliche Kontaktklebrigkeit (Tack) bzw. Klebkraft (Belastbarkeit der Klebeverbindung) zu verleihen. Die erfindungsgemäß verwendeten Polyisobutene weisen vorzugsweise eine plastisch klebrige bis kautschukartige Konsistenz auf. Besonders bevorzugt werden Polyisobutene mit einem zahlenmittleren Molekulargewicht Mₙ von mindestens etwa 100000 g/mol verwendet, wobei das zahlenmittleren Molekulargewicht Mₙ durch Gelpermeationschromatographie (GPC) unter Verwendung von Polyisobuten-Standards bestimmt wird. Besonders bevorzugt weist das Polyisobuten ein zahlenmittleres Molekulargewicht Mₙ im Bereich von etwa 100000 bis etwa 1000000 g/mol aufweist. Auf diese Weise wird der erfindungsgemäßen Zusammensetzung eine besonders ausgezeichnete Kontaktklebrigkeit (Tack) bzw. Klebkraft in einem weiten Temperaturbereich verliehen, Der Gehalt des Polyisobutens bezogen auf die Gesamtmenge der Zusammensetzung beträgt beispielsweise etwa 0,1-5 Gewichtsprozent, bevorzugter etwa 0,5-3 Gewichtsprozent, noch bevorzugter etwa 0,8-1,8 Gewichtsprozent. Komponente b) unterscheidet sich stofflich sowohl von Komponente a) als auch von Komponente c).

### Komponente c) - Zylinderöl

Als erfindungsgemäße Komponente c) wird mindestens ein Zylinderöl verwendet. Unter Zylinderölen versteht man relativ hochviskose Mineralöle, die ihre Bezeichnung ihrem ursprünglichen Hauptverwendungszweck, nämlich der Schmierung von mit Dampf in Kontakt kommenden Teilen von Dampfmaschinenzylindern verdanken. Erfindungsgemäß handelt es sich bevorzugt um raffinierte, gegebenenfalls additivierte Schmieröle auf Mineralölbasis, die die Mindestanforderungen an Schmieröle Z nach DIN 51 510 erfüllen, In der erfindungsgemäßen Zusammensetzung dienen sie insbesondere als flüssiger Träger, um die Verarbeitung der weiteren Bestandteile auf dem Mischer zu erlauben. Sie verbessern darüber hinaus die Konsistenz der erfindungsgemäßen Dichtmittel auch in Bezug auf ihre Klebrigkeit. Die erfindungsgemäß verwendeten Zylinderöle sind bevorzugt bei Raumtemperatur (25 °C) flüssig. Bevorzugt weisen die erfindungsgemäß verwendeten Zylinderöle eine kinematische Viskosität bei 40°C von mehr als 100 mm²/s bevorzugter mehr als 300 mm²/s, noch bevorzugter mehr als 600 mm²/s und noch bevorzugter mehr als 900 mm²/s (nach DIN EN ISO 3104) auf. Das Zylinderöl weist bevorzugt einen Pourpoint von weniger als 20 °C, noch bevorzugter von weniger als 10 °C noch bevorzugter von weniger als 0 °C auf (nach DIN ISO 3016) auf. Auf diese Weise werden eine gute Verarbeitbarkeit der erfindungsgemäßen Zusammensetzung und eine hohe Klebrigkeit insbesondere bei niedrigen Temperaturen sichergestellt. Des Weiteren weist das erfindungsgemäß verwendete Zylinderöl einen Flashpoint (Cleveland open cup DIN ISO 2592) von mehr als 200 °C, bevorzugter mehr als 250° noch bevorzugter mehr als 300° auf. Auf diese Weise wird insbesondere eine hohe Flammbeständigkeit der erfindungsgemäßen Zusammensetzung bereitgestellt. Der Gehalt des Zylinderöls bezogen auf die Gesamtmenge der Zusammensetzung beträgt beispielsweise etwa 0,1-20 Gewichtsprozent, bevorzugter etwa 1-15 Gewichtsprozent, noch bevorzugter etwa 2-10 Gewichtsprozent, ganz besonders bevorzugt 3-6 Gewichtsprozent. Komponente c) unterscheidet sich stofflich sowohl von Komponente a) als auch von Komponente b).

### Komponente d) - Anorganischer Füllstoff

Die erfindungsgemäße Zusammensetzung weist weiterhin mindestens einen anorganischen Füllstoff d) auf. Der an organische Füllstoff wird bevorzugt ausgewählt aus natürlichen, halbsynthetischen und synthetischen anorganischen Füllstoffen, wie Silikate (Ton, Lehm, Talk, Glimmer, Kaolin, Neuburger Kieselerde), Carbonate (Kreide, Dolomit), Sulfate (Baryt bzw. Schwerspat) und Oxiden/Hydroxiden (Quarzmehle, kristalline Kieselsäure, Aluminium-/Magnesiumhydroxide sowie Magnesium-, Zink- oder Colciumoxide); Silikate, Oxide und Hydroxide, hergestellt durch Fällungsverfahren (Kieselsäure, Kreide, Aluminium- und Magnesiumhydroxid) oder in thermischen Prozessen (pyrogene Kieselsäure, Ruß, Metalloxide); Glasfasern, Glaskugeln und Glasbruch), Bevorzugt werden die anorganischen Füllstoffe ausgewählt aus der Gruppe, die besteht aus: Calciumcarbonat; Calcit; Kreide; Bariumsulfat; Bariumzinksulfatsulfid; Silikaten; Siliziumdioxid und Mischungen davon. Zur Optimierung der Konsistenz werden erfindungsgemäß bevorzugt mindestens zwei oder drei verschiedene Füllstoffe verwendet. Besonders bevorzugt wird erfindungsgemäß eine Kombination von anorganischen Füllstoffen auf der Basis von Calciumcarbonat (wie natürlich vorkommender Kreiden, Kalkstein, wie Calcit und Aragonit und Mischungen davon, bevorzugt zwei oder mehr Typen davon) sowie Bariumsulfat (wie Schwerspat, Baryt) verwendet. Erfindungsgemäß wird besonders bevorzugt Calciumcarbonat in Form natürlich vorkommender Kreiden und Kalkstein verwendet. Besonders bevorzugt ist eine Kombination von natürlich vorkommender Kreide und Calcit, welche besonders bevorzugt in Kombination mit Bariumsulfat (Schwerspat, Baryt) verwendet wird. Dabei dient der Zusatz des Bariumsulfats (wie zum Beispiel Schwerspat der Firma Sachtleben) insbesondere der Verbesserung der Konsistenz der erfindungsgemäßen Zusammensetzung sowie der Verbesserung der Steifigkeit. Bei den erfindungsgemäß verwendeten anorganischen Füllstoffen handelt es sich bevorzugt um pulverförmige, nicht faserförmige Materialien mit einem massenmittleren Teilchendurchmesser d₅₀ von beispielsweise etwa 0,1 bis 10 µm, bevorzugt 1 bis 8 µm, Der Gesamtgehalt der anorganischen Füllstoffe bezogen auf die Gesamtmenge der Zusammensetzung beträgt beispielsweise etwa 40-95 Gewichtsprozent, bevorzugter etwa 50-90 Gewichtsprozent, noch bevorzugter etwa 60-85 Gewichtsprozent, ganz besonders bevorzugt etwa 70-83 Gewichtsprozent, Im Falle der Verwendung einer Kombination Calciumcarbonatfüllstoffen (insbesondere eine Kombination von natürlich vorkommender Kreide und Calcit) und Bariumsulfat werden diese vorzugsweise im Gewichtsverhältnis 10;1 bis 1:10, bevorzugter 8:1 bis 1:1, noch bevorzugter 6:1 bis 2:1 verwendet. Das Gewichtsverhältnis zwischen natürlich vorkommender Kreide und Calcit kann beispielsweise zwischen 8:1 bis 1:1 liegen. Als natürlich vorkommende Kreide kann beispielsweise U-Kreide (Calciumcarbonat) verwendet werden. Die genannten anorganischen Füllstoffe können dabei verstärkend (z.B. pyrogene Kieselgele) und nicht verstärkend sein. Bevorzugt ist hier jedoch die Verwendung nicht verstärkender anorganischer Füllstoffe mit einer BET-Oberfläche von weniger als 50 m²/g, bevorzugter weniger als 40 m²/g, da sie die beste Dicht- und Klebwirkung ergeben.

### Komponente e) Faserförmiger Füllstoff

Die erfindungsgemäße Zusammensetzung weist weiterhin mindestens einen faserförmigen Füllstoff e) auf. Komponente e) unterscheidet sich damit von der Füllstoff Komponente d), die nicht faserförmig ist. Faserförmige Füllstoffe schließen erfindungsgemäß insbesondere ein: Polyamid-, Polyester-, Polyacrylnitril-, Polyethylen-, Polypropylen-, Polyvinylalkohol-, Aramid-, Kohlenstoff-Fasern, Glasfasern, Mineralwollfasern und Mischungen davon. Sie dienen in der erfindungsgemäßen Zusammensetzung insbesondere zur Erhöhung der thermischen Stabilität (verringerte Fließfähigkeit bei erhöhten Temperaturen bis beispielsweise etwa 90 °C, gelegentlich auch Standfestigkeit genannt). Besonders bevorzugt sind hier organische, faserförmige Füllstoffe, wie solche aus Baumwolle, Viskose, Hanf, Flachs, Jute, Sisal, Polyamid-, Polyester-, Polyacrylnitril-, Polyethylen-, Polypropylen-, Polyvinylalkohol-, Aramid-, Kohlenstoff-Fasern, Glasfaser, Mineralwollfasern, Sie weisen beispielsweise durchschnittliche Schnittlängen im Bereich von 0,01-20 mm, vorzugsweise 0,05-15 mm und besonders bevorzugt im Bereich von 0,1-4 mm auf. Erfindungsgemäß besonders bevorzugt sind synthetische organische Fasern, wie Polyamid-, Polyester-, Polyacrylnitril-, Polyethylen-, Polypropylenfasern, besonders bevorzugt Polyethylen- oder Polypropylenfasern in durchschnittlichen Längen von beispielsweise 0,2 - 1,6 mm und mit Faseroberflächen von beispielsweise 5 - 10 m²/g, Erfindungsgemäß verwendbare faserförmige Füllstoffe sind im Handel erhältlich. Der Gehalt der faserförmige Füllstoffe bezogen auf die Gesamtmenge der Zusammensetzung beträgt beispielsweise etwa 0,01-10 Gewichtsprozent, bevorzugter etwa 0,1-8 Gewichtsprozent, noch bevorzugter etwa 1-5 Gewichtsprozent, ganz besonders bevorzugt 1,5-4 Gewichtsprozent.

### Komponente f) - Pigmente und Farbstoffe

Die erfindungsgemäße Zusammensetzung kann wahlweise einen oder mehrere Pigmente und/oder Farbstoffe enthalten, die insbesondere der Farbgebung der erfindungsgemäßen Zusammensetzung dienen. Sie sind verschieden von den vorstehend genannten Füllstoffen d) bzw. e). Es können insbesondere übliche anorganische oder organische, synthetische oder natürliche Farbpigmente verwendet werden, wie zum Beispiel anorganische Pigmente wie Antimontrioxid, Antimonpentoxid, basisches Bleicarbonat, basisches Bleisulfat oder Bleisilikat, Titandioxid (Anatas, Rutil), Zinkoxid, Zinksulfid, Metalloxide wie Berlinerblau, Bleichromat, Bleisulfochromate, Chromantimontitanat, Chromoxide, Eisenoxide, wie synthetisches Fe₂O₃ (rot), oder synthetisches Fe₃O₄ (schwarz), Kobaltblau, Kobaltchromblau, Kobaltnickelgrau, Manganblau, Manganviolett, Molybdatorange, Molybdatrot, Nickelantimontitanat, Ultramarinblau, sowie Metallsulfide wie Antimontrisulfid, Cadmiumsulfid, Cadmiumsulfoselenide, Zirkonsilikate, Zirkonvanadiumblau, Zirkonpraseodymgelb und Mischungen davon. Beispiele für organische Pigmente sind Antrachinon-, Azo-, Azomethin-, Benzanthron-, Chinacridon-, Chinophthalon-, Dioxazin-, Flavanthron-, Indanthron-, Isoindolin-, Isoindolinon-, Methin-, Perinon-, Perylen-, Phthalocyanin-, Pyranthron-, Pyrrolopyrrol-, Thioindigopigmente sowie Metallkomplexe von z. B. Azo-, Azomethin-, Methinfarbstoffen oder Metallsalzen von Azoverbindungen. Besonders bevorzugt sind anorganische Pigmente, insbesondere Eisenoxid-Pigmente. Bezogen auf die obenstehenden Gewichtsanteile (also insbesondere bezogen auf 5 - 60 Gew.-Teile des naphthenischen Mineralölraffinats) können beispielsweise bis zu 20 Gewichtsteile Pigmente insbesondere Eisenoxide in der Zusammensetzung enthalten sein. Bezogen auf die Gesamtmenge der Zusammensetzung kann dies beispielsweise einem Anteil in Gewichtsprozent von beispielsweise 0,5-7, vorzugsweise 1-5 Gewichtsprozent entsprechen.

### Komponente g) - Verdickungsmittel

Die erfindungsgemäße Zusammensetzung kann wahlweise einen oder mehrere Verdickungsmittel enthalten. Die Komponente g) ist von den übrigen Komponenten der erfindungsgemäßen Zusammensetzung verschieden (d.h., sie werden nicht deren Mengenanteilen zugerechnet.). Sie dient insbesondere einer Verbesserung der Mischbarkeit der Komponenten der erfindungsgemäßen Zusammensetzung. Erfindungsgemäß werden bevorzugt temperaturbeständige Verdickungsmittel wie insbesondere anorganische Verdickungsmittel verwendet. Sofern es ihre Temperaturbeständigkeit zulässt, können jedoch auch organische Verdickungsmittel verwendet werden. Wie bevorzugt verwendeten anorganischen Verdickungsmittel schließen beispielsweise Polykieselsäuren, hochdisperse pyrogene Kieselsäuren, Aluminiumhydroxid, Aluminiumoxidhydrat, Aluminiumstearat, Talkum, Quarzmineralien, Magnesiumhydroxid, Tonmineralien wie Montmorillonite oder Kaolinite und Mischungen der genannten ein. Vorzugsweise werden Verdickungsmittel auf der Basis von Aluminium, wie insbesondere Aluminiumstearat verwendet. Die weniger bevorzugten organischen Verdickungsmittel schließen beispielsweise ein: Agar-agar, Carrageen, Tragant, Gummi arabicum, Alginate, Pektine, Polyosen, Guar-Mehl, Stärke, Dextrine, Gelatine, Casein, Carboxymethylcellulose, Celluloseether, Hydroxyethylcellulose, Hydroxypropylcellulose, Poly(meth)acrylsäurederivate, Polyvinylalkohol, Polyamide, Polyimine und Mischungen davon. Bezogen auf die obenstehenden Gewichtsanteile (also insbesondere bezogen auf 5 - 60 Gew.-Teile des naphthenischen Mineralölraffinats) können beispielsweise bis zu 10 Gewichtsteilen Verdickungsmittel insbesondere solche auf der Basis von Aluminium, wie insbesondere Aluminiumstearat in der Zusammensetzung enthalten sein. Bezogen auf die Gesamtmenge der Zusammensetzung kann dies beispielsweise einem Anteil in Gewichtsprozent von beispielsweise etwa 0,01-3, vorzugsweise 0,1-1 Gewichtsprozent entsprechen.

### Komponente h) - Disperglermittel

Die erfindungsgemäße Zusammensetzung kann wahlweise einen oder mehrere übliche Dispergiermittel enthalten. Dabei handelt es sich beispielsweise um Salze langkettiger Fettsäuren, langkettige Fettsäureester, langkettige Alkyl-Ammoniumverbindungen; langekettige Alkylbenzolsulfonate etc. Bezogen auf die obenstehenden Gewichtsanteile (also insbesondere bezogen auf 5 - 60 Gew.-Teile des naphthenischen Mineralölraffinats) können beispielsweise bis zu 10 Gewichtsteilen Dispergiermittel in der Zusammensetzung enthalten sein. Bezogen auf die Gesamtmenge der Zusammensetzung kann dies beispielsweise einem Anteil in Gewichtsprozent von beispielsweise etwa 0,01-3, vorzugsweise 0,1-1 Gewichtsprozent entsprechen.

### Komponente l) Stabilisierungsmittel

Die erfindungsgemäße Zusammensetzung kann wahlweise einen oder mehrere übliche Stabilisierungsmittel enthalten. Dabei handelt es sich beispielsweise um Alterungsschutzmittel, wie Antioxidantien, wie zum Beispiel substituierte Phenole, Phophorhaltige Antioxidantien; Sterisch gehinderte Amine, Antiozonantien, Lichtschutzmittel wie UV-Absorber, Metallseifen (insbesondere zur Erhöhung der thermischen Stabilität). Bezogen auf die obenstehenden Gewichtsanteile (also insbesondere bezogen auf 5 - 60 Gew.-Teile des naphthenischen Mineralölraffinats) können beispielsweise bis zu 10 Gewichtsteilen Stabilisierungsmittel insbesondere solche auf der Basis von Aluminium, wie insbesondere Aluminiumstearat in der Zusammensetzung enthalten sein. Bezogen auf die Gesamtmenge der Zusammensetzung kann dies beispielsweise einem Anteil in Gewichtsprozent von beispielsweise etwa 0,01-3, vorzugsweise 0,1 -1 Gewichtsprozent entsprechen.

### Komponente J) - Hilfsmittel

Als erfindungsgemäße Komponente j) können übliche Hilfsmittel für Polymerzusammensetzung, wie beispielsweise Fungizide, Bakterizide, Weichmacher, Haftmittel, Thixotropiermittel, Flammschutzmittel, Rheologiehilfsmittel verwendet werden. Bezogen auf die obenstehenden Gewichtsanteile (also insbesondere bezogen auf 5 - 60 Gew.-Teile des naphthenischen Mineralölraffinats) können beispielsweise bis zu 10 Gewichtsteilen der Hilfsmittel insbesondere solche auf der Basis von Aluminium, wie insbesondere Aluminiumstearat in der Zusammensetzung enthalten sein. Bezogen auf die Gesamtmenge der Zusammensetzung kann dies beispielsweise einem Anteil in Gewichtsprozent von beispielsweise etwa 0,01-3, vorzugsweise 0,1-1 Gewichtsprozent entsprechen.

Die erfindungsgemäße Zusammensetzung weist bevorzugt eine Dichte im Bereich von 0,9 bis 5 g/cm³, besonders bevorzugt von 1 bis 3 g/cm³besonders bevorzugt von 1 bis 2 g/cm³auf, Die Dichte wird durch Auswahl und Menge der Komponenten a) bis j) eingestellt.

Die erfindungsgemäßen Zusammensetzungen werden bevorzugt durch Mischen in einem handelsüblichen Kneter bevorzugt im Temperaturbereich zwischen Raumtemperatur (25 °C) und beispielsweise etwa 80 °C, vorzugsweise im Bereich von 30-60 °C, noch bevorzugt im Bereich von 40-50 °C hergestellt. Bevorzugt legt man dabei zunächst die flüssigen Komponenten gegebenenfalls auch in der Form ein oder mehrerer Vormischungen im Kneter vor, und setzt dann nach und nach die übrigen Komponenten zu. Die Mischung beträgt beispielsweise von etwa 30 min bis zu 4 h. Bevorzugt beträgt die Mischung etwa 1 bis 3 h. Die Vormischungen, die lediglich einen Teil der erfindungsgemäß verwendeten Komponenten enthalten, können gegebenenfalls auch bei höherer Temperatur (beispielsweise oberhalb von 60 °C) zunächst vorgemischt werden, anschließend abgekühlt werden und erst dann mit den übrigen Komponenten bei niedrigeren Temperaturen (wie beispielsweise unterhalb von 60 °C) vermischt werden. Nach dem Vermischen kann die erfindungsgemäße Zusammensetzung über eine handelsübliche Schlitzdüse, wie beispielsweise eine Breitschlitzdüse, in eine gewünschte, bevorzugt schichtförmige Form gebracht werden. Es stellt einen besonderen Vorteil der erfindungsgemäßen Zusammensetzung dar, dass diese durch Steuerung der Mischungsparameter, insbesondere der Mischungstemperatur, sowie beispielsweise der Wahl einer geeigneten Austrittsdüse auch in geschäumter Form erhalten werden kann. Dabei wird die Mischung nach Austritt aus der Austrittsdüse zweckmäßig schockgekühlt, damit die Schaumform erhalten bleibt.

Die erfindungsgemäße Zusammensetzung wird nach Austritt aus der Mischapparatur bevorzugt auf eine ablösbare Trennschicht, wie beispielsweise ein Silikontrennpapier aufgebracht. Es stellt dabei einen weiteren überraschenden Vorteil der erfindungsgemäßen Zusammensetzung dar, dass ihre Klebrigkeit durch aus dem Silikontrennpapier in die Zusammensetzung eindiffundiertes Silikon nicht beeinträchtigt wird, wodurch keine Probleme bei Langzeitlagerung in dieser Form auftreten. Herkömmliche Klebstoffe wie Butyl, die bei Abdeckungen für Gebäude eingesetzt werden, werden dagegen durch eindiffundiertes Silikon im Laufe der Zeit stark beeinträchtigt.

Die erfindungsgemäße Zusammensetzung wird bevorzugt in Form von Schichten, besonders bevorzugt langen Bahnen in Schichtform mit Schichtdicken von zweckmäßig weniger als 10 mm, noch zweckmäßiger in weniger als 5 mm, noch zweckmäßiger weniger als 1 mm bereitgestellt. Sie kann problemlos auf geeigneten Trennschichten, wie den genannten Silikontrennpapieren zu Rollen von Klebebändern aufgewickelt und gelagert werden. Diese Ausführungsform wird gelegentlich auch als Laminat bezeichnet. Die Anwendung auf geeigneten Substraten erfolgt dann durch einfaches Entfernen des Trennpapiers von solchen Laminaten.

In einer bevorzugten Ausführungsform befindet sich die erfindungsgemäße Zusammensetzung zwischen einem zu verklebenden Substrat bzw. Bauteil und der Trennschicht. Die Anwendung erfolgt dann in einfacher Weise durch Abziehen der Trennschicht und Anbringen bzw. Verkleben des Substrats bzw. des Bauteils an der gewünschten Stelle.

Die erfindungsgemäße Zusammensetzung haftet auf einer Vielzahl von Substraten bzw. Bauteilen wie beispielsweise aus (gegebenenfalls lackierten) Metallen wie Aluminium, Stahl (insbesondere Edelstahl), verzinkten Stählen, vorbehandelten (insbesondere phosphatierten) Stähle, Kupfer, Messing, Glas, Holz und/oder Kunststoffe, Keramik, Beton, Ziegel, Steinen etc. und ist dabei äußerst temperaturstabil. Es stellte dabei einen besonders überraschenden Vorteil der erfindungsgemäßen Zusammensetzung dar, dass das Aufbringen auf einen geeigneten Untergrund auch dann gelingt, wenn dieser feucht ist, was besonders bei Baustellen insbesondere beim Dachdecken ein besonderer Vorteil ist. Die Zusammensetzung braucht einfach nur auf den feuchten Untergrund bzw. an das jeweilige Bauteil fixiert und angeformt werden, so das ein Kontakt zwischen dem jeweiligen Untergrund besteht. Die Zusammensetzung zieht dann gewissermaßen von selbst an. Weitere Vorteile gegenüber der Verwendung von Butyl-Dichtstoffen bestehen wie bereits erwähnt in der Verwendung preiswerterer Rohstoffe, einer größeren Variabilität hinsichtlich des Eigenschaftsprofils sowie insbesondere auch der Fähigkeit zur Aufschäumbarkeit ohne die Verwendung teurer Spezialgeräte.

In einer besonderen Ausführungsform der vorliegenden Erfindung betrifft diese des Weiteren Abdeckungen, insbesondere für Gebäude, die mit einer Schicht der erfindungsgemäßen Zusammensetzung ausgerüstet sind.

Es war daher wie vorstehend bereits erwähnt insbesondere Aufgabe der vorliegenden Erfindung, gerade auch im Vergleich zu Butyl eine Zusammensetzung mit vorteilhaften Eigenschaften zu schaffen und eine gegenüber dem Stand der Technik weiter entwickelte Abdeckung, welche unter Verwendung der Zusammensetzung hergestellt wird, bereit zu stellen.

Eine Abdeckung, die gemäß Nebenanspruch eine als Klebstoffschicht ausgebildete, anspruchsgemäße Zusammensetzung umfasst, kann grundsätzlich dabei bereits auf einen noch feuchten oder nassen Untergrund aufgeklebt werden. Zwar haftet eine solche Abdeckung nicht sofort auf einem nassen oder feuchten Untergrund in gewünschter Weise an. Die Zusammensetzung bewirkt jedoch, dass sich beispielsweise innerhalb von 24 h oftmals die Klebstoffschicht mit dem Untergrund derart verbindet, dass der gewünschte dauerhafte Halt geschaffen wird. Durch die Zusammensetzung wird es also möglich, eine Abdeckung selbst dann zum Beispiel bei einem Gebäude anzubringen, wenn der Untergrund noch nass oder feucht ist. Zeitverzögerungen aufgrund eines nassen oder feuchten Untergrunds können daher vermieden werden.

Da die Zusammensetzung selbst bei Temperaturen von bis zu wenigstens 100°C nicht derart fließfähig wird, dass das Klebstoffmaterial wegfließen könnte, kann die Abdeckung beispielsweise auch auf einem Dach eingesetzt sein, also in Bereichen mit auftretenden Umgebungstemperaturen von zum Beispiel 90°C. Die Abdeckung kann daher eine First- und Gratrolle sein, wie diese u. a. aus der Druckschrift DE 101 39 273 A1 bekannt ist. Eine First- und Gratrolle ist eine bahnförmige Abdeckung, der en beiden bahnförmigen Randbereiche mit einer Klebstoffschicht versehen sind, nicht aber der mittlere Bereich dazwischen. Der mittlere Bereich ist zumindest bereichsweise luftdurchlässig gestattet. Eine First- und Gratrolle kann vollständig aus Kunststoff oder Metall bestehen. Eine First- und Gratrolle ein oder mehrere aus Kunststoff oder Metall bestehende Bahnen umfassen, die miteinander durch Nähen, Schweißen oder Kleben verbunden sind. Insbesondere die beiden bahnförmigen Randbereiche einer First- und Gratrolle sind dehnbar und/ oder streckbar, um in Vertiefungen von Dachpfannen hinein gedrückt werden zu können.

Vorzugsweise wird als Abdeckung ein Anschlussband mit einem zumindest überwiegend aus Kunststoff bestehenden Gewebe bereitgestellt, bei dem das Gewebe plastisch verformbar ist. Ein Gewebe besteht regelmäßig aus Kettfäden und Schussfäden, die sich im Wesentlichen rechtwinklig kreuzen. Das Gewebe kann wenigstens um 100%, bevorzugt um 200%, ganz besonders bevorzugt um wenigstens 300 % in wenigstens eine Richtung, vorzugsweise in beide Raumrichtungen plastisch gedehnt werden, ohne zu zerreißen. Der plastische Verformungsgrad beträgt also wenigstens 100%, bevorzugt um 200%, ganz besonders bevorzugt um wenigstens 300 %. Es ist also möglich, das Anschlussband so zu dehnen, dass es anschließend im Fall der 100% plastischen Dehnbarkeit doppelt so lang ist und in diesem gedehnten Zustand verbleibt. Nachhaltige Rückstellkräfte im Gewebe werden so vermieden. Im Vergleich zu der aus der DE 29 22 242 A1 bekannten Maschenware, deren Streckung in einer Richtung zwingend mit einer entsprechenden Stauchung in einer weiteren Richtung einhergeht, kann das plastisch verformbare Gewebe im Wesentlichen nur in die beanspruchte Richtung gedehnt werden und kann in andere Richtungen zumindest weitestgehend die Form beibehalten. Demgemäß ist es möglich, das Anschlussband sehr viel leichter an unterschiedliche Formen und Geometrie einer Baukonstruktion anzupassen. Die Verarbeitung eines solchen Anschlussbandes vereinfacht sich, da das Anschlussband mit geringem Kraftaufwand flexibel geformt werden kann. Baukonstruktionen und deren Übergänge können in vorteilhafter Weise einstückig verarbeitet werden ohne dass eine Verarbeitung aus mehreren Teilen wie z.B. Zuschnitten erforderlich ist. Eine zeitaufwändige Anpassung an Baukonstruktionen kann somit entfallen und die Gefahr, dass bei der Verarbeitung undichte Stellen entstehen, kann dementsprechend reduziert werden. Es gelingt damit eine flexible Verarbeitung des Anschlussbandes sowie eine Verringerung des Materialverbrauchs.

Das Gewebe verbessert auch die Stabilität eines derartigen Anschlussbandes. Nach einer entsprechenden plastischen Verformung behält das Gewebe im Wesentlichen die Form, sofern keine weitere plastische Verformung veranlasst wird. Auf diese Weise kann bei Anwendungen, die regelmäßig ein Mittel zum Stabilisieren beispielsweise in Form eines Armierungsgewebes erfordern, ein derartiges Anschlussband auch zur Stabilisierung verwendet werden. Ein zusätzliches Material zum Stabilisieren kann so eingespart werden. Die Struktur eines Gewebes bietet darüber hinaus Vorteile für eine Benetzung und den anschließenden mechanischen Formschluss beim Kleben. Die gewebte Struktur erhöht die Benetzbarkeit mit einer Beschichtung wie z.B. einer Kleb- oder Dämmschicht gegenüber einer vollflächigen Struktur und verbessert damit die Haftungseigenschaften des Materials. Es gelingt so eine zuverlässige Fügung mit verschiedensten Untergründen von Baukonstruktionen wie z.B. Stein, Mauerwerk, Zement oder Holz. Im Unterschied zu der aus der Druckschrift DE 10 2007 000 792 A1 bekannten Folie ist es nicht erforderlich, eine Maschenware zusätzlich vorzusehen, um haltbar einen Putz auf das Band aufbringen zu können. Das anspruchsgemäße Anschlussband ist ferner vorteilhafterweise gegenüber Schädigungen aufgrund von Durchstoßkräften, insbesondere bei dünnen und spitzen Durchstoßkörpern, widerstandsfähiger. Bei Folien führt schon eine geringe Beanspruchung mit einem dünnen und spitzen Durchstoßkörper zu einem Anriss des Materials. Demgegenüber lässt sich das plastisch verformbare Gewebe stärker beanspruchen, bis es zu einem bleibenden Anriss des Materials kommt. Die Struktur des Gewebes ermöglicht eine Kompensation von Durchstoßkräften, ohne dass es zwingend zu einer Schädigung des Gewebes kommt. Ein derart widerstandfähiges Anschlussband lässt sich somit auch in der Praxis leichter verarbeiten.

Um eine gewünschte wasserabweisende Wirkung des Gewebes zu erhalten, können die Kett- und Schussfäden des Gewebes geeignet dicht beieinander liegen. Die Dichte der beieinander liegenden Fäden kann zugleich die Bindung im Gewebe erhöhen, um beispielsweise die Formstabilität eines Gewebes zu verbessern. Gleichzeitig kann das Gewebe auch durch geeignete Fadendichte wasserabweisend vorzugsweise wasserdicht ausgeführt werden. Auftreffendes Wasser kann somit abfließen und durchdringt das Gewebe nicht, wodurch beispielsweise Baukonstruktionen verbessert vor dem Eintritt von Flüssigkeit geschützt werden. Wahlweise ist es möglich, das Gewebe luftdurchlässig und/oder dampfdurchlässig auszugestalten. Vorzugsweise besitzt das Gewebe auf einer Seite wasserabweisende Eigenschaften und kann gleichzeitig Luft und/oder Dampf von der anderen Seite des Gewebes durchlassen. Es gelingt so ein wasserundurchlässiges Anschlussband bereitzustellen, das auch den Abtransport von Luft und/oder Dampf ermöglicht.

Bevorzugt besteht das Gewebe ganz oder zumindest überwiegend aus ein oder mehreren verschiedenen Polypropylenmaterialien, da Polypropylen grundsätzlich die nötige Oberflächenspannung im Vergleich zu Wasser bereitstellt, um ein Abfließen von beispielsweise Kondenswasser zu ermöglichen. Auch kann durch Polypropylen ein Material bereit gestellt werden, das sehr UV-beständig ist und kaum verrottet, also selbst bei schwierigen äußeren Witterungen sehr langlebig ist. Die Beständigkeit gegenüber Witterung, Frost und Temperatur führt zu einer guten Alterungsbeständigkeit, die insbesondere für den Einsatz eines Anschlussbandes im Außenbereich einer Baukonstruktion von entscheidendem Vorteil ist. Weiterhin kann Polypropylen auch schwerentflammbar ausgeführt werden, um ein selbständig löschendes Brandverhalten zu ermöglichen. Ein solches Material kann in jeder gewünschten Farbe hergestellt werden. Auch die Durchmesser der Fäden sind frei wählbar. Die Eigenschaften des Gewebes können darüber hinaus durch Stärke und/oder Querschnitt der Kett- und/oder Schussfäden eingestellt werden.

Um ein Anschlussband besonders flexibel an unterschiedliche Baukonstruktionen anzupassen, sind in einer Ausführungsform sämtliche Kett- und/oder Schussfäden um wenigstens 100%, bevorzugt um 200%, ganz besonders bevorzugt um wenigstens 300 % plastisch verformbar. Zur Herstellung eines Kett- oder Schussfadens für ein Gewebe, wird dieser insbesondere im Fall von Polypropylen im Rahmen seiner Herstellung zunächst gestreckt, bis seine Streckgrenze fast erreicht ist. Durch eine solche sogenannte Verstreckungsphase werden Fäden hergestellt, die beispielsweise noch bis zu 20% gestreckt werden können, ehe diese reißen.

Das Anschlussband weist eine Beschichtung zum Kleben und/oder Abdichten auf, die durch die Zusammensetzung gebildet ist. Vorzugsweise ist die Beschichtung vollflächig mit dem Gewebe verbunden. Diese Beschichtung hat die Funktion, das Anschlussband in der gewünschten Lage auf einer Baukonstruktion zu befestigen und/oder gegen Feuchtigkeit abzudichten. Alternativ oder ergänzend kann die Beschichtung plastisch verformbar ausgeführt werden. Eine derartige Beschichtung trägt dazu bei, dass insgesamt Rückstellkräfte vermieden bzw. gering gehalten werden. Um die Eigenschaften einer Beschichtung aufrechtzuerhalten, wird diese vorzugsweise durch eine Kunststofffolie abgedeckt. Die Kunststofffolie wird bei der Verarbeitung des Anschlussbandes abgezogen, um Baukonstruktionen in der vorher beschriebenen Weise zu bearbeiten. Die Beschichtung ist insbesondere wenigstens 1 mm dick, vorzugsweise wenigstens 2 mm, um eine dichte Verbindung und/oder Abdichtung zur Baukonstruktion zu schaffen.

In einer Ausführungsform der Erfindung ist die vorgenannte Beschichtung wenigstens 0,6 mm, vorzugsweise 1 mm dick. Die vorgenannte Schichtdicke ist insbesondere günstig, um ein Reißen eines derartigen Anschlussbandes zu vermeiden und gleichzeitig eine plastische Verformbarkeit sicherzustellen.

In einer Ausführungsform der Erfindung ist die aus der Zusammensetzung bestehende Beschichtung weniger als 2 mm dick. Es ist zu bevorzugen, unter den zur Auswahl stehenden Ausführungsformen der Zusammensetzung eine solche auszuwählen, die besonders formstabil ist und die im Anschluss an eine Dehnung dann ihre gedehnte Form auch besonders gut beibehält, sich also plastisch verhält. Denn ein plastisch dehnbares Anschlussband ist nicht vollkommen unelastisch und entwickelt im Anschluss an eine Dehnung Rückstellkräfte. Unerwünschte Auswirkungen solcher bei der bevorzugten Ausführungsform einer Zusammensetzung nicht erwünschten Rückstellkräfte können besonders gut reduziert werden, wenn die Zusammensetzung so ausgewählt wurde, da es sich im Anschluss an eine Dehnung besonders formstabil verhält, Eine formstabile Beschichtung kann aber nur dann verwendet werden, wenn die Beschichtung hinreichend dünn ist. Aus diesen Gründen ist eine Obergrenze von 2 mm Schichtdicke zu bevorzugen. Mit einer Schichtdicke von 1 bis 1,5 mm lassen sich am besten die verschiedenen Anforderungen erfüllen, die eine aus der Zusammensetzung bestehende Beschichtung erfüllen soll.

Eine geschlossene, geeignet dicke aus der Zusammensetzung bestehende Klebstoffschicht dient nicht nur als formstabilisierendes Klebemittel, sondern dichtet ergänzend gegen Feuchtigkeit und Wind ab, Eine gewünschte Dichtigkeit wird dann also nicht nur durch das Gewebe des Anschlussbandes, sondern ergänzend auch durch die Klebstoffschicht sichergestellt. Eine geschlossene Beschichtung dämmt außerdem Körperschall und wirkt wärmeisolierend. Durch Vorsehen der auf das Gewebe aufgebrachten Klebstoffschicht gelingt es also verbessert abzudichten. Außerdem wird wärmeisoliert und Schall gedämmt.

Die Dämmung von Körperschall gelingt besonders gut, wenn die Beschichtung unmittelbar auf der Baukonstruktion, durch die bzw. in der Körperschall entsteht, aufgeklebt ist. Von der Baukonstruktion ausgehender Schall kann aufgrund der festen Verbindung besonders gut in die Klebstoffschicht eindringen und kann dadurch in Wärme umgesetzt werden. Daher wird in vorteilhafterweise das Anschlussband mit der Beschichtung unmittelbar auf die Baukonstruktion aufgeklebt, die gedämmt werden sollen. Beispielsweise kann solch eine Baukonstruktion ein Körper sein, der zur Leitung von Wasser dient. Insbesondere Abzweigungen oder eckige Geometrien können mit nur einem Anschlussband aufgrund der großen Dehnbarkeit des Materials vollflächig abgedeckt werden. Verbleibende Lücken werden so minimiert und damit ein besonders gutes gewünschtes Resultat erzielt.

Die Farbe des Anschlussbandes ist bevorzugt farblich an die Farbe der entsprechenden Baukonstruktion angepasst. Im Dachbereich, wo regelmäßig schwarze oder rote Dachziegel verwendet werden, ist das Anschlussband beispielsweise farblich dementsprechend schwarz oder rot angepasst.

In Abhängigkeit von der Baukonstruktion an der das Anschlussband verwendet wird, werden unterschiedliche Formen und Abmessungen eines Anschlussbandes benötigt. Das Anschlussband kann vorteilhafterweise auch in einer bestimmten Form und Abmessung gefertigt werden. Die Form und Abmessung des Anschlussbandes kann insbesondere Aussparungen enthalten, die auf bestimmte Baukonstruktionen wie z.B. Wandanschlüsse Gaubenanschlüsse usw. angepasst sind. Ein derartig geformtes Anschlussband kann somit schneller verarbeitet werden, ohne dass eine zeitaufwendige Anpassung an vorhandene Baukonstruktion notwendig ist. Für großflächige Anwendungen kann das Anschlussband auch in entsprechend großen Materialbreiten hergestellt werden, um eine effiziente Verarbeitung zu erreichen.

Zur Verstärkung von bestimmten Bereichen des Anschlussbandes, können Schuss- und/oder Kettfäden aus mehreren einzelnen Fäden zusammengedreht werden, so dass diese in verzwirnter Form vorliegen. Derartige Schuss- und/oder Kettfäden haben eine höhere Reißfestigkeit und ermöglichen die Herstellung von besonders stabilen Bereichen.

In weiterer Ausgestaltung der Erfindung kann das Anschlussband oder Bereiche des Anschlussbandes wellenförmig und/oder zick-zack-förmig vorgeformt werden. Derartig geformte Bereiche können leichter an Falten, Mulden und Ecken von Baukonstruktionen angepasst werden. Das Material eines so geformten Anschlussbandes ist insbesondere so gewählt, dass durch Kaltverformung die gewünschte Wellen- und/oder Zick-Zack-Form hergestellt werden kann, um den Herstellungsaufwand gering zu halten.

Das Anschlussband kann neben den plastisch verformbaren Bereichen auch elastisch verformbare Bereiche aufweisen. Vorzugsweise dehnen sich die elastisch verformbaren Bereiche im Wesentlichen auf ihre Ausgangsgröße zurück. Durch diese Ausgestaltung wird erreicht, dass sich die plastische Verformbarkeit des Anschlussbandes auf bestimmte Bereiche beschränkt. Beispielsweise kann ein solcher elastisch verformbarer Bereich zum Befestigen eines Anschlussbandes verwendet werden. Zum gleichen Zweck kann auch ein nicht verformbarer Bereich vorgesehen werden, der im Wesentlichen keine Verformung aufweist und gleichermaßen zum Befestigen verwendet werden kann.

Die gewünschte plastische oder elastische Dehnbarkeit wird erreicht, indem entsprechende Kett- und/oder Schussfäden eingesetzt werden. Soll also beispielsweise einen Band nur in einer Richtung plastisch gedehnt werden können, so werden entweder nur Kettfäden eingesetzt, die zu wenigstens 100% plastisch gedehnt werden können, oder entsprechend dehnbare Schussfäden. Soll ein Band in sämtliche Richtungen in eingangs genannter Weise plastisch gedehnt werden können, so werden Kettfäden sowie Schussfäden eingesetzt, die zu wenigstens 100 % plastisch gedehnt werden können.

Anstelle eines Gewebes ist einer Ausführungsform eine Folie eingesetzt, die entsprechend plastisch dehnbar. Es kann aber auch eine überwiegend elastisch dehnbare Folie anstelle des Gewebes eingesetzt sein, was aber weniger zu bevorzugen ist, da plastische Dehnbarkeit bei einer Verwendung als Abdeckung regelmäßig von Vorteil ist.

Nachfolgend werden besonders bevorzugte Ausführungsformen der Erfindung aufgeführt:

### Ausführungsform 1 :

Zusammensetzung, enthaltend:
a) mindestens ein naphthenisches Mineralölraffinat,
b) mindestens ein Polyisobuten,
c) mindestens ein Zylinderöl,
d) mindestens einen anorganischen Füllstoff,
e) mindestens einen faserförmigen Füllstoff,
f) wahlweise ein oder mehrere Pigmente und/oder Farbstoffe,
g) wahlweise ein oder mehrere Verdickungsmittel,
h) wahlweise ein oder mehrere Dispergiermittel,
i) wahlweise ein oder mehrere Stabilisierungsmittel,
j) wahlweise ein oder mehrere Hilfsmittel.

### Ausführungsform 2:

Zusammensetzung nach einer der vorstehenden Ausführungsformen, enthaltend:
   a) 5 - 60 Gew.-Teile mindestens ein naphthenisches Mineralölraffinat,
   b) 0,5 - 10 Gew.-Teilen mindestens ein Polyisobuten,
   c) 2 - 40 Gew.-Teile mindestens ein Zylinderöl,
   d) 50 - 400 Gew.-Teile mindestens einen anorganischen Füllstoff,
   e) 0,1 - 10 Gew.-Teile mindestens einen faserförmigen Füllstoff.

### Ausführungsform 3:

Zusammensetzung nach einer der vorstehenden Ausführungsformen, enthaltend:
   a) 10 - 50 Gew.-Teile mindestens ein naphthenisches Mineralölraffinat,
   b) 1 - 8 Gew.-Teilen mindestens ein Polyisobuten,
   c) 10 - 35 Gew.-Teile mindestens ein Zylinderöl,
   d) 150 - 350 Gew.-Teile mindestens einen anorganischen Füllstoff,
   e) 1 - 7 Gew.-Teile mindestens einen faserförmigen Füllstoff.

### Ausführungsform 4:

Zusammensetzung nach einer der vorstehenden Ausführungsformen, worin das naphthenisches Mineralölraffinat a) eine kinematische Viskosität bei 20°C von mehr als 20 mm²/s (nach DIN EN ISO 3104) aufweist.

### Ausführungsform 5:

Zusammensetzung nach einer der vorstehenden Ausführungsformen, worin das naphthenisches Mineralölraffinat a) einen Pourpoint von weniger als 0 °C (nach DIN ISO 3016) aufweist.

### Ausführungsform 6:

Zusammensetzung nach einer der vorstehenden Ausführungsformen, worin das naphthenisches Mineralölraffinat a) einen Flammpunkt COC nach DIN ISO 2592 von mehr als 100°C aufweist.

### Ausführungsform 7:

Zusammensetzung nach einer der vorstehenden Ausführungsformen, worin das naphthenisches Mineralölraffinat a) einen Gehalt an aromatischen Kohlenstoffatomen (CA) (nach DIN 51378) von weniger als 20 %, einen Gehalt an naphthenischen Kohlenstoffatomen (CN) (nach DIN 51378) von mehr als 20 % und einen Gehalt an paraffinischen Kohlenstoffatomen (CP) (nach DIN 51378) von mehr als 20 %, aufweist.

### Ausführungsform 8:

Zusammensetzung nach einer der vorstehenden Ausführungsformen, worin das Polyisobuten b) ein zahlenmittleres Molekulargewicht Mn von mindestens 100000 g/mol aufweist.

### Ausführungsform 9:

Zusammensetzung nach einer der vorstehenden Ausführungsformen, worin das Polyisobuten b) ein zahlenmittleres Molekulargewicht Mn im Bereich von 100000 bis 1000000 g/mol aufweist.

### Ausführungsform 10:

Zusammensetzung nach einer der vorstehenden Ausführungsformen, worin das Zylinderöl c) eine kinematische Viskosität bei 40°C von mehr als 100 mm²/s (nach DIN EN ISO 3104) aufweist.

### Ausführungsform 11 :

Zusammensetzung nach einer der vorstehenden Ausführungsformen, worin das Zylinderöl c) einen Pourpoint von weniger als 20 °C (nach DIN ISO 3016) aufweist.

### Ausführungsform 12:

Zusammensetzung nach einer der vorstehenden Ausführungsformen, worin das Zylinderöl c) einen Flashpoint (Cleveland open cup DIN ISO 2592) von mehr als 200 °C aufweist.

### Ausführungsform 13:

Zusammensetzung nach einer der vorstehenden Ausführungsformen, worin der anorganische Füllstoff d) ausgewählt wird aus der Gruppe, die besteht aus: Calciumcarbonat; Calcit; Kreide; Bariumsulfat; Silikaten; Siliziumdioxid und Mischungen davon.

### Ausführungsform 14:

Zusammensetzung nach einer der vorstehenden Ausführungsformen, worin der anorganische Füllstoff aus mindestens zwei verschiedenen Füllstoffen ausgewählt wird.

### Ausführungsform 15:

Zusammensetzung nach einer der vorstehenden Ausführungsformen, worin der anorganische Füllstoff Calciumcarbonat sowie Bariumsulfat umfasst,

### Ausführungsform 16:

Zusammensetzung nach einer der vorstehenden Ausführungsformen, worin das Calciumcarbonat aus natürlich vorkommender Kreide und Kalkstein ausgewählt wird.

### Ausführungsform 17:

Zusammensetzung nach einer der vorstehenden Ausführungsformen, worin der faserförmige Füllstoff aus Polyamid-, Polyester-, Polyacrylnitril-, Polyethylen-, Polypropylen-, Polyvinylalkohol-, Aramid-, Kohlenstoff-Fasern, Glasfasern, Mineralwollfasern und Mischungen davon ausgewählt wird.

### Ausführungsform 18:

Zusammensetzung nach einer der vorstehenden Ausführungsformen, worin der faserförmige Füllstoff durchschnittliche Faserlängen im Bereich von 0,1 bis 4 mm aufweist.

### Ausführungsform 19:

Zusammensetzung nach einer der vorstehenden Ausführungsformen, worin der faserförmige Füllstoff aus Polyethylenfasern ausgewählt wird.

### Ausführungsform 20:

Zusammensetzung nach einer der vorstehenden Ausführungsformen, enthaltend ein oder mehrere Verdickungsmittel.

### Ausführungsform 21 :

Zusammensetzung nach einer der vorstehenden Ausführungsformen, enthaltend ein oder mehrere Verdickungsmittel, ausgewählt aus Metallstearaten,

### Ausführungsform 22:

Zusammensetzung nach einer der vorstehenden Ausführungsformen, welche eine Dichte von 1 bis 5 g/cm³ aufweist.

### Ausführungsform 23:

Zusammensetzung nach einer der vorstehenden Ausführungsformen, welche in geschäumter Form vorliegt.

### Ausführungsform 24:

Verwendung der Zusammensetzung nach einer der vorstehenden Ausführungsformen als Dicht- und/oder Klebstoff.

### Ausführungsform 25:

Verwendung der Zusammensetzung nach einer der vorstehenden Ausführungsformen, worin diese in Form von Schichten mit einer Schichtdicke von weniger als 1 0 mm bereitgestellt werden.

### Ausführungsform 26:

Laminat, enthaltend eine Schicht, gebildet aus der Zusammensetzung nach einer der vorstehenden Ausführungsformen, sowie eine mit dieser Schicht im Kontakt stehende ablösbare Trennschicht.

### Ausführungsform 27:

Laminat nach einer der vorstehenden Ausführungsformen, worin die Trennschicht mindestens ein Silikon umfasst,

### Ausführungsform 28:

Laminat nach einem der vorstehenden Ansprüche, welches in der Form von Klebebändern bereitgestellt wird,

### Ausführungsform 29:

Abdeckung insbesondere für ein Gebäude mit einer Schicht, die auf einer Seite mit einer Klebstoffschicht versehen ist, **dadurch gekennzeichnet, dass** die Klebstoffschicht eine Zusammensetzung nach einer der vorhergehenden Ausführungsformen aufweist.

### Ausführungsform 30:

Abdeckung nach der vorhergehenden Ausführungsform, **dadurch gekennzeichnet, dass** die Klebstoffschicht mit einem Trennpapier, insbesondere einem Silikon haltigen Trennpapier abgedeckt ist.

### Ausführungsform 31 :

Abdeckung nach einer der vorhergehenden Ausführungsformen, **dadurch gekennzeichnet, dass** die Schicht eine aus Kunststoff oder Metall bestehende Folie oder ein aus Kunststoff oder Metall bestehendes Gewebe oder Vlies ist.

### Ausführungsform 32:

Abdeckung nach einer der vorhergehenden Ansprüche, **dadurch gekennzeichnet, dass** die Schicht dehnbar und/ oder streckbar und/ oder biegsam ist.

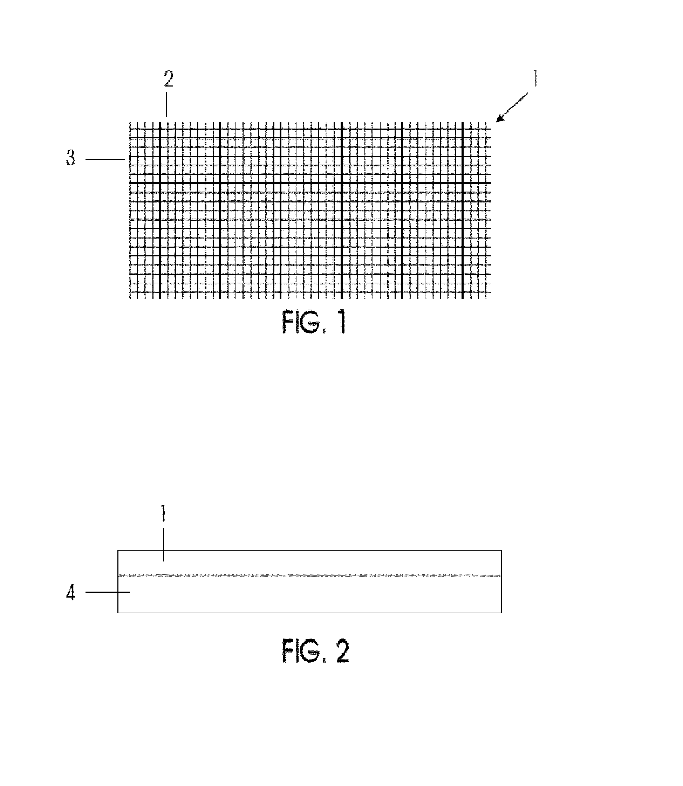

Figur 1 zeigt eine Aufsicht auf ein erfindungsgemäßes Anschlussband 1 zum Abdecken, Isolieren, Abdichten oder Dämmen von Baukonstruktionen. Das Anschlussband umfasst ein Gewebe, das aus Kettfäden 2 und Schussfäden 3 gebildet wird, die sich im Wesentlichen rechtwinklig kreuzen. Vorzugsweise sind sämtliche Kett- und/oder Schussfäden 2,3 um wenigstens 100% plastisch verformbar. Die Durchmesser und/oder Stärke der Kett- und Schussfäden 2, 3 können unterschiedlich gewählt werden, um die Eigenschaften des Gewebes geeignet ausbilden zu können und gleichzeitig die plastische Verformbarkeit des Anschlussbandes sicherzustellen. Je nachdem wie eng die Kett- und Schussfäden 2,3 beieinander liegen, kann die Fadendichte eingestellt werden, um das Anschlussband insbesondere wasserundurchlässig auszuführen.

Figur 2 zeigt das Anschlussband 1 im Schnitt, das eine Beschichtung 4 zum Kleben und/oder Abdichten auf einer Seite aufweist. Die Beschichtung 4 besteht bevorzugt aus der Zusammensetzung und bedeckt das vorzugsweise Anschlussband 1 vollflächig. Die Beschichtung dient vorzugsweise der Befestigung des Anschlussbandes 1 auf einer Baukonstruktion insbesondere bei Übergängen von Baukonstruktionen für eine vollständige Abdeckung, Isolierung, Abdichtung und Dämmung.

Anstelle eines Gewebes 1 kann eine insbesondere biegsame Folie eingesetzt sein. Die Folie kann aus Kunststoff oder Metall bestehen. Besteht die Folie aus Metall, so ist diese insbesondere dann vorzugsweise wellenartig geformt und/oder gefaltet, um gestreckt werden zu können.

## Patentansprüche

1. Zusammensetzung, enthaltend:
a) mindestens ein naphthenisches Mineralölraffinat,
b) mindestens ein Polyisobuten,
c) mindestens ein Zylinderöl,
d) mindestens einen anorganischen Füllstoff,
e) mindestens einen faserförmigen Füllstoff,
f) wahlweise ein oder mehrere Pigmente und/oder Farbstoffe,
g) wahlweise ein oder mehrere Verdickungsmittel,
h) wahlweise ein oder mehrere Dispergiermittel,
i) wahlweise ein oder mehrere Stabilisierungsmittel,
j) wahlweise ein oder mehrere Hilfsmittel.

2. Zusammensetzung nach einem der vorstehenden Ansprüche, enthaltend:
a) 5 - 60 Gew.-Teile mindestens ein naphthenisches Mineralölraffinat,
b) 0,5 - 10 Gew.-Teilen mindestens ein Polyisobuten,
c) 2 - 40 Gew.-Teile mindestens ein Zylinderöl,
d) 50 - 400 Gew.-Teile mindestens einen anorganischen Füllstoff,
e) 0,1 - 10 Gew.-Teile mindestens einen faserförmigen Füllstoff.

3. Zusammensetzung nach einem der vorstehenden Ansprüche, worin das naphthenisches Mineralölraffinat a) eine kinematische Viskosität bei 20°C von mehr als 20 mm²/s (nach DIN EN ISO 3104) aufweist.

4. Zusammensetzung nach einem der vorstehenden Ansprüche, worin das naphthenisches Mineralölraffinat a) einen Pourpoint von weniger als 0 °C (nach DIN ISO 3016) aufweist.

5. Zusammensetzung nach einem der vorstehenden Ansprüche, worin das Polyisobuten b) ein zahlenmittleres Molekulargewicht Mₙ von mindestens 100000 g/mol aufweist.

6. Zusammensetzung nach einem der vorstehenden Ansprüche, worin das Zylinderöl c) eine kinematische Viskosität bei 40°C von mehr als 100 mm²/s (nach DIN EN ISO 3104) aufweist.

7. Zusammensetzung nach einem der vorstehenden Ansprüche, worin der anorganische Füllstoff d) ausgewählt wird aus der Gruppe, die besteht aus: Calciumcarbonat; Calcit; Kreide; Bariumsulfat; Silikaten; Siliziumdioxid und Mischungen davon.

8. Zusammensetzung nach einem der vorstehenden Ansprüche, worin der faserförmige Füllstoff aus Polyamid-, Polyester-, Polyacrylnitril-, Polyethylen-, Polypropylen-, Polyvinylalkohol-, Aramid-, Kohlenstoff-Fasern, Glasfasern, Mineralwollfasern und Mischungen davon ausgewählt wird.

9. Zusammensetzung nach einem der vorstehenden Ansprüche, welche eine Dichte von 1 bis 5 g/cm³ aufweist.

10. Zusammensetzung nach einem der vorstehenden Ansprüche, welche in geschäumter Form vorliegt.

11. Verwendung der Zusammensetzung nach einem der vorstehenden Ansprüche als Dicht- und/oder Klebstoff.

12. Verwendung der Zusammensetzung nach einem der vorstehenden Ansprüche worin diese in Form von Schichten mit einer Schichtdicke von weniger als 10 mm bereitgestellt werden.

13. Laminat, enthaltend eine Schicht, gebildet aus der Zusammensetzung nach einem der vorstehenden Ansprüche, sowie eine mit dieser Schicht im Kontakt stehende ablösbare Trennschicht.

14. Abdeckung insbesondere für ein Gebäude mit einer Schicht, die auf einer Seite mit einer Klebstoffschicht versehen ist, **dadurch gekennzeichnet, dass** die Klebstoffschicht eine Zusammensetzung nach einem der vorhergehenden Ansprüche aufweist.

15. Abdeckung nach einem der vorhergehenden Ansprüche, **dadurch gekennzeichnet, dass** die Schicht eine aus Kunststoff oder Metall bestehende Folie oder ein aus Kunststoff oder Metall bestehendes Gewebe oder Vlies ist.
